(19) Europäisches Patentamt
European Patent Office
Office européen des brevets

(11) EP 3 056 888 A1

(12) EUROPEAN PATENT APPLICATION
published in accordance with Art. 153(4) EPC

(43) Date of publication:
17.08.2016 Bulletin 2016/33

(51) Int Cl.:
*G01M 11/02* (2006.01)

(21) Application number: 13895373.2

(86) International application number:
PCT/CN2013/087640

(22) Date of filing: 21.11.2013

(87) International publication number:
WO 2015/051573 (16.04.2015 Gazette 2015/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.10.2013 CN 201310471241

(71) Applicant: Toplens Hangzhou Inc.
Hangzhou, Zhejiang 310052 (CN)

(72) Inventor: MENG, Hongxiang
Hangzhou
Zhejiang 310052 (CN)

(74) Representative: Hocking, Adrian Niall et al
Albright IP Limited
County House
Bayshill Road
Cheltenham, Glos. GL50 3BA (GB)

(54) **HAND-HELD LENS SURFACE FOCAL POWER MEASURING DEVICE**

(57) A hand-held lens surface power measuring device is provided, which includes a main control cavity (2) and an optical measuring head (7). The main control cavity (2) includes a data-and-image processing control unit and a display screen (1). The main control cavity is fixedly connected with the optical measuring head. The optical measuring head includes a light source (15), prisms, a lens (9), a beam splitter (14), a ring-shaped aperture (17), an image sensor (10) and a lens support (3). The image sensor, the ring-shaped aperture and the beam splitter are sequentially distributed on the optical measuring head from top to bottom. The hand-held lens surface power measuring device measures the power of the lens surface on the basis of an optical reflection method, and the lens is not necessary to be de-blocked when the Rx lens are measured. The size of the device can be greatly reduced by adopting the optical measuring head with a single integrated structure, the device can be operated by a single hand of an operator, the installment and alignment of the optical measuring head is finished during implementing the optical contact or gluing, the subsequent alignment and maintenance are not required, a complicated alignment mechanism is saved, and the stability and the reliability of the device are improved.

Fig. 1

EP 3 056 888 A1

**Description**

TECHNICAL FIELD

The present application relates to a lens surface power measuring device, and more particularly, relates to a hand-held lens surface power measuring device.

BACKGROUND

During currently Rx lens (ophthalmic prescription spectacle lens) production, best fit base semi-finished lens will be selected via Rx-design program on a server according to an order requirement, and data of a surface to be processed will be calculated by the Rx-design program. The surface to be processed includes a spherical surface, a cylindrical surface, an aspherical surface, an atoric surface, a freeform surface, or the like.

The semi-finished lens to be processed is firstly blocked on the chuck, and the chuck is clamped on a workpiece spindle of a milling and grinding machine, and the surface to be processed is milled and grinded to get a designed surface shape. And then, the chuck is clamped on a workpiece spindle of a polishing machine, and the surface which has been milled and grinded is then polished thereon. After that, invisible marks will be engraved on the polished surface using a laser engraving machine, indicating positions of reference points of prisms and reference directions of cylinder axis. Then the engraved lens is de-blocked from the chuck, and a transmission power and other optical parameters (including a sphere power, a cylinder power, and an axis direction and the like) of the processed lens is measured by a transmission-type lensmeter, and the parameters are further compared with the order requirement. If the power measured is out of tolerance, the lens should be rejected and discarded because it is impossible to reprocess the surface shape of the processed lens since it is impossible to maintain the same processing reference when the lens which has been de-blocked from the chuck is blocked onto the chuck again. And thus it will increase the production cost and enlarge the processing cycle of the Rx lens.

The transmission-type lensmeter described above can only measure the transmission power of the ophthalmic lens; however, the transmission power is not only affected by the processed surface, but also affected by the surface shape quality of the base of the ophthalmic lens. Therefore, the transmission power cannot reflect the surface shape quality of the processed surface. Nevertheless, it is very important to ensure that the surface shape of the processed surface matches with the design surface shape during the production of the Rx lens. Existing commercial instruments available for performing this job such as Focovision SR2 and Dual Lens Mapper from Belgium Automatic and Robotics corporation can control the surface shape quality of the ophthalmic lens by measuring the surface power of the ophthalmic lens. However, the Focovision SR2 only measures the surface power of a single point on the surface of the lens, and it can neither detect the lens with chuck nor read the designed surface shape on the server and compare the designed data with the measurement results due to the design of desktop. The Dual Lens Mapper cannot measure the ophthalmic lens blocked on the chuck. In additional, there is a mechanical scanning type surface shape measuring device based on the principle of a three-coordinate measuring machine. The measuring device of this type can directly measure the three-dimensional surface shape of the processed surface of an ophthalmic lens which has not been de-blocked, and can compare with the designed surface shape to obtain a processing error. However, the measuring device of this type is very time consuming, and approximately 10 minutes are needed for the measurement of one ophthalmic lens, which cannot meet the measuring requirements of the Rx lens. And also another disadvantage is that these instruments are very huge and immovable.

BRIEF SUMMARY

The present application provides a hand-held lens surface power measuring device, aiming at the problems described above.

To achieve the objective described above, the present application is realized via the following technical solution.

A hand-held lens surface power measuring device is provided, which includes a main control cavity and an optical measurement head; wherein the main control cavity includes a data and image processing control unit and a display screen, and the main control cavity is fixedly connected to the optical measurement head; the optical measurement head includes a light source, prisms, a lens, a beam splitter, an ring-shaped aperture, an image sensor and a lens support; the image sensor, the ring-shaped aperture and the beam splitter are sequentially distributed on the optical measurement head from top to bottom.

In a preferred embodiment of the present invention application, optical components in the optical measurement head are connected to each other by optical contact bonding or glue cement.

In a preferred embodiment of the present invention application, the prisms include a reflective prism A, a reflective prism B, a reflective prism C and a reflective prism D; wherein the reflective prism A is located at a right bottom corner of the optical measurement head; the light source is arranged on the reflective prism A; the reflective prism B is arranged on an upper end of the optical measurement head, and point angles at top-left and top-right of corners of the reflective prism B are chamfered with an angle of 45 degrees; the reflective prism C is located at a left bottom corner of the optical measurement head, and a point angle of a bottom-left corner of the reflective prism C is chamfered with an angle of 45 degrees; the lens is located between the reflective prism B and the reflective prism C, and the beam splitter is parallel to the chamfer angle at the point angle of the bottom-left corner of the reflective prism C.

In a preferred embodiment of the present invention application, the prisms further include a connecting prism A, a connecting prism B and a connecting prism C; wherein the connecting prism A is located between the connecting prism B and the reflective prism C, the connecting prism B is located between the beam splitter and the ring-shaped aperture, and the connecting prism C is located between the reflective prism A and the reflective prism D.

In a preferred embodiment of the present invention application, the lens support is a hollow and cylindrical structure and located at the bottom of the optical measurement head.

In a preferred embodiment of the present invention application, parts of the lens support which are at the bottom thereof and are contacted with the lens to be measured are ruby or sapphire rings.

In a preferred embodiment of the present invention application, the image sensor is a CCD image sensor or a CMOS image sensor.

In a preferred embodiment of the present invention application, the main body further includes a wireless communication module via which design data and measurement results are transferred between the server and the apparatus.

In a preferred embodiment of the present invention application, the wireless communication module is based on a wireless communication protocol selecting from a group consisting of GSM, GRPS, 3G, LTE, Bluetooth, and WiFi.

In a preferred embodiment of the present invention application, the main control cavity is a smart phone with a display screen.

In a preferred embodiment of the present invention application, the data and image processing control unit is a DSP chip, a micro-processor, or a processor of a smart phone.

This application has the advantages as below:

1. The surface power of the ophthalmic lens can be measured on the basis of an optical reflection method, and the ophthalmic lens is unnecessary to be de-blocked when Rx lens is measured.

2. Designed surface shape data of the ophthalmic lens can be received from the server and a theoretical value is calculated and is further compared with the actual surface power measured to determine if the measured ophthalmic lens is qualified. If the measure result is out of the tolerance, the ophthalmic lens still on the chuck is taken back to the surface working machine for a surface correction.

3. Since a smart phone is used as the main control cavity, the apparatus is easy to handheld. Also the LED light, the CMOS image sensor, the display screen and the wireless communication can also be directly utilized.

4. Due to the monolithic structure of the optical measurement head, the volume of the optical measurement head can be minimized so that the apparatus can be operated by an operator with one hand. The installment and alignment of the optical measuring head are finished during the optical contact bonding or gluing process, and the subsequent alignment and maintenance are not needed, thus a complicated alignment mechanism is saved, and the stability and reliability of the device are improved.

BRIEF DESCRIPTION OF THE DRAWINGS

Fig. 1 shows the external view according to the preferred embodiment of the present application;
Fig. 2 shows the front perspective view according to the preferred embodiment of the present application;
Fig. 3 shows the side perspective view according to the preferred embodiment of the present application;
Fig. 4 illustrates an optical measuring head according to a preferred embodiment of the present application; and
Fig. 5 shows the principle of optical measurement according to a preferred embodiment of the present application.

In the drawings: 1. Display screen, 2. Main control cavity, 3. Lens support, 4. Ophthalmic lens, 5. Alloy, 6. Chuck, 7. Optical measurement head, 8. Reflective prism B, 9. lens, 10. Image sensor, 11. Reflective prism D, 12. Connecting prism A, 13. Reflective prism C, 14. Beam splitter, 15. Light source, 16. Reflective prism A, 17. Ring-shaped aperture, 18. Connecting prism B, 19. Connecting prism C, 20. Surface of the measured lens, 21. Reflected beam, 22. Incident beam, 23. Optical axis.

## DETAILED DESCRIPTION OF THE PREFERRED EMBODIMENT

Embodiments of the present application are further described in detail with reference to the drawings.

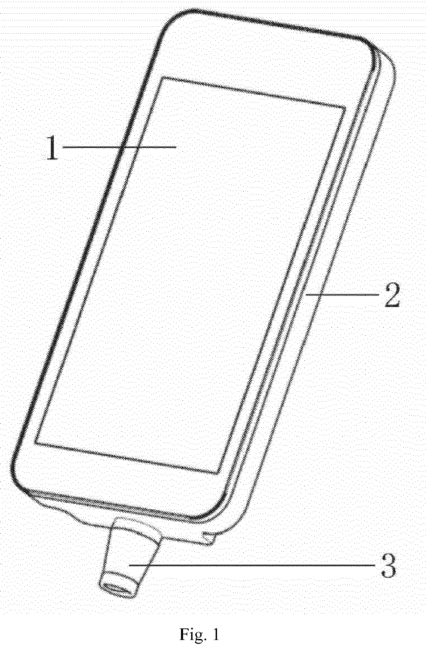

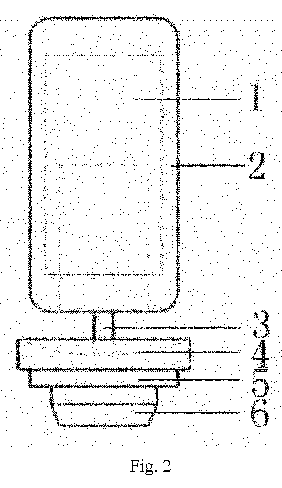

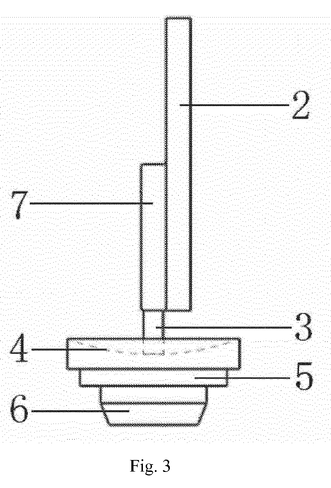

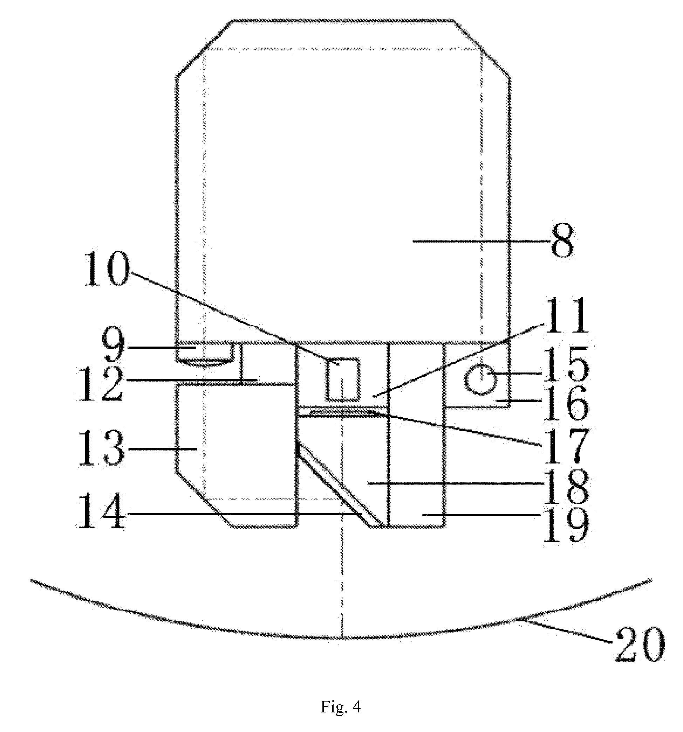

As is shown in Fig. 1, Fig. 2, Fig. 3, and Fig. 4, a hand-held lens surface power measuring device provided in the present application includes a main control cavity 2 and an optical measurement head 7. The main control cavity 2 includes a data and image processing control unit and a display screen 1, and the main control cavity 2 is fixedly connected to the optical measurement head 7. The optical measurement head 7 includes a light source 15, prisms, a lens 9, a beam splitter 14, a ring-shaped aperture 17, an image sensor 10 and a lens bracket 3. The image sensor 10, the ring-shaped aperture 17 and the beam splitter 14 are sequentially distributed on the optical measurement head 7 from top to bottom.

Optical components in the optical measurement head 7 are connected to each other by optical contact bonding or glue cement.

Prisms include a reflective prism A 16, a reflective prism B 8, a reflective prism C 13 and a reflective prism D 11. The reflective prism A 16 is located at a right bottom corner of the optical measurement head 7. The light source 15 is arranged on the reflective prism A 16. The reflective prism B 8 is arranged on an upper end of the optical measurement head 7, and point angles at top-left and top-right of corners of the reflective prism B 8 are chamfered with an angle of 45 degrees. The reflective prism C 13 is located at a left bottom corner of the optical measurement head 7, and a point angle of a bottom-left corner of the reflective prism C 13 is chamfered with an angle of 45 degrees. The lens 9 is located between the reflective prism B 8 and the reflective prism C 13, and the beam splitter 14 is parallel to the chamfer angle at the point angle of the bottom-left corner of the reflective prism C 13.

Prisms further include a connecting prism A 12, a connecting prism B 18 and a connecting prism C 19. The connecting prism A 12 is located between the connecting prism B 18 and the reflective prism C 13, the connecting prism B 18 is located between the beam splitter 14 and the ring-shaped aperture 17, and the connecting prism C 19 is located between the reflective prism A 16 and the reflective prism D 11.

The lens support 3 is a hollow and cylindrical structure and located at the bottom of the optical measurement head 7.

Parts of the lens support 3 which are at the bottom thereof and are contacted with the lens to be measured are ruby or sapphire rings.

The image sensor 10 is a CCD image sensor or CMOS image sensor.

The main control cavity 2 further includes a wireless communication module via which the design data and measurement results can be transferred between the server and the apparatus.

The wireless communication module is based on a wireless communication protocol selecting from a group consisting of GSM, GRPS, 3G, LTE, Bluetooth, and WiFi.

The main control cavity 2 is a smart phone with a display screen.

The data and image processing control unit is a DSP chip, a micro-processor, or a processor of a smart phone.

The optical components in the optical measurement head are connected to each other by optical contact bonding or glue cement.

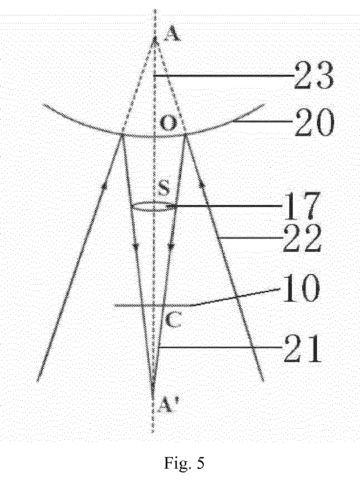

Fig. 5 shows the principle of optical measurement of the present application. An incident light beam 22 is converged at a point A on the optical axis 23. The surface of the measured lens 20 is perpendicular to the optical axis 23 and further intersects with the optical axis 23 at a point O. A ring-shaped aperture 17 with a fixed radius r and an image sensor 10 are fixed on the same side of the surface of the measured lens 20, and respectively intersect with the optical axis 23 at point S and point C. The incident beam 22 reaches the surface of the measured lens 20 and is reflected after that. A reflected beam 21 goes through the ring-shaped aperture 17 and forms an image on the image sensor 10.

In this case, firstly, it is assumed that the surface of the measured lens 20 is a spherical surface with a curvature radius R, then the reflected beam 21 will converge at a point A' on the optical axis 23, and the image formed on the sensor 10 will be a round ring with a radius c. In this illustrated optical system, a point object A forms a point image A' by the reflection from the surface of the measured lens 20. The object distance l and the image distance l' can be described by following equations:

$$l = \overline{OA} \qquad (1)$$

$$l' = -\left( \overline{OS} + \overline{SC} + \overline{CA'} \right) \qquad (2)$$

In this case, $\overline{OA}$, $\overline{OS}$ and $\overline{SC}$ are already known.

According to the homothetic triangle theory, there is:

$$\frac{\overline{CA'}}{\overline{SC}} = \frac{c}{r-c} \qquad (3)$$

Thus the equation (2) can be rewritten as:

$$I' = -\left(\overline{OS} + \overline{SC} + \frac{c}{r-c}\overline{SC}\right) = -\left(\overline{OS} + \frac{r}{r-c}\overline{SC}\right) \qquad (4)$$

According to the imaging formula of a reflective sphere, there is:

$$\frac{1}{1} + \frac{1}{I'} = \frac{2}{R} \qquad (5)$$

Hence, the curvature radius R of the surface of the measured lens 20 is:

$$R = \frac{2}{\frac{1}{1} + \frac{1}{I'}} = \frac{2}{\frac{1}{\overline{AO}} - \frac{1}{\overline{OS} + \frac{r}{r-c}\overline{SC}}} \qquad (6)$$

The single sphere power S of the surface of the measured lens 20 can thus be calculated by:

$$S = \frac{n-1}{R} \times 1000 = 500(n-1)\left(\frac{1}{\overline{AO}} - \frac{1}{\overline{OS} + \frac{r}{r-c}\overline{SC}}\right) \qquad (7)$$

Where n is the refractive index of the ophthalmic lens to be measured or glass mold.
When the surface of the measured lens 20 is a surface with a cylinder power, such as a cylindrical surface, a sphero-cylindrical surface, a toric surface and the like, two curvature radii on its two orthogonal principal meridian planes are respectively defined as R1 and R2. At this time, the image formed on the image sensor 10 will be an elliptic ring with a major radius c1 and a minor radius c2. The two sphere powers S1 and S2 on the two orthogonal principal meridian planes of the surface to be measured can be calculated by:

$$S_1 = \frac{n-1}{R_1} \times 1000 = 500(n-1)\left(\frac{1}{\overline{AO}} - \frac{1}{\overline{OS} + \frac{r}{r-c_1}\overline{SC}}\right) \qquad (8a)$$

$$S_2 = \frac{n-1}{R_2} \times 1000 = 500(n-1)\left(\frac{1}{\overline{AO}} - \frac{1}{\overline{OS} + \frac{r}{r-c_2}\overline{SC}}\right) \qquad (8b)$$

Therefore, the cylinder power C of the surface to be measured can be calculated by:

$$C = \left| S_1 - S_2 \right| \qquad (9)$$

And the cylinder axis is the orientation of the major axis of the elliptic ring.

During the measurement, a light beam emitted from the light source 15 is reflected by the reflective prism A 16, the reflective prism B 8 and the reflective prism C 13, and further travels along the optical axis 23. The lens 9 converts the light beam emitted from the light source 15 into the desired incident beam 22 which is reflected by the beam splitter 14 and is projected onto the surface of the measured lens 20. The light beam reflected from the surface of the measured lens 20 goes through the beam splitter 14 and the ring-shaped aperture 17, and is then reflected by the reflective prism D 11 to be projected onto the image sensor 10 to form an image. The image is analyzed, and the surface focus power of the local area where the surface of the measured lens 20 is contacted with the lens support 3 is obtained, and the measurement result is displayed on the display screen 1.

Those described above are only the preferred implementations of the present application. It should be pointed out that, one skilled in the art may make many modifications and improvements without going beyond the core technical features of the present application. All these belong to the protection scope of the present application.

**Claims**

1. A hand-held lens surface power measuring device, **characterized in that**, it comprises a main control cavity (2) and an optical measurement head (7); the main control cavity (2) comprises a data and image processing control unit and a display screen (1), and the main control cavity (2) is fixedly connected to the optical measurement head (7); the optical measurement head (7) comprises a light source (15), prisms, a lens (9), a beam splitter (14), an ring-shaped aperture (17), an image sensor (10) and a lens support (3); the image sensor (10), the ring-shaped aperture (17) and the beam splitter (14) are sequentially distributed on the optical measurement head (7) from top to bottom.

2. The hand-held lens surface power measuring device according to claim 1, **characterized in that**, optical components in the optical measurement head (7) are connected to each other by optical contact bonding or glue cement.

3. The hand-held lens surface power measuring device according to claim 1, **characterized in that**, the prisms comprise a reflective prism A (16), a reflective prism B (8), a reflective prism C (13) and a reflective prism D (11); the reflective prism A (16) is located at a right bottom corner of the optical measurement head (7); the light source (15) is arranged on the reflective prism A (16); the reflective prism B (8) is arranged on an upper end of the optical measurement head (7), and point angles at top-left and top-right of corners of the reflective prism B (8) are chamfered with an angle of 45 degrees; the reflective prism C (13) is located at a left bottom corner of the optical measurement head (7), and a point angle of a bottom-left corner of the reflective prism C (13) is chamfered with an angle of 45 degrees; the lens (9) is located between the reflective prism B (8) and the reflective prism C (13), and the beam splitter (14) is parallel to the chamfer angle at the point angle of the bottom-left corner of the reflective prism C (13).

4. The hand-held lens surface power measuring device according to claim 1 or claim 3, **characterized in that**, the prisms further comprise a connecting prism A (12), a connecting prism B (18) and a connecting prism C (19); the connecting prism A (12) is located between the connecting prism B (18) and the reflective prism C (13), the connecting prism B (18) is located between the beam splitter (14) and the ring-shaped aperture (17), and the connecting prism C (19) is located between the reflective prism A (16) and the reflective prism D (11).

5. The hand-held lens surface power measuring device according to claim 1, **characterized in that**, the lens support (3) is a hollow and cylindrical structure and located at the bottom of the optical measurement head (7).

6. The hand-held lens surface power measuring device according to claim 5, **characterized in that**, parts of the lens support (3) which are at the bottom thereof and are contacted with the lens to be measured are ruby or sapphire rings.

7. The hand-held lens surface power measuring device according to claim 3, **characterized in that**, the image sensor (10) is a CCD image sensor or a CMOS image sensor.

8. The hand-held lens surface power measuring device according to claim 1, **characterized in that**, the main body (2) further comprises a wireless communication module via which design data and measurement results are transferred between the server and the apparatus.

9. The hand-held lens surface power measuring device according to claim 8, **characterized in that**, the wireless communication module is based on a wireless communication protocol selecting from a group consisting of GSM, GRPS, 3G, LTE, Bluetooth, and WiFi; the main control cavity (2) is a smart phone with a display screen.

10. The hand-held lens surface power measuring device according to claim 1, **characterized in that**, the data and image processing control unit is a DSP chip, a micro-processor, or a processor of a smart phone.

Fig. 1

Fig. 2

Fig. 3

Fig. 4

Fig. 5

# INTERNATIONAL SEARCH REPORT

| International application No. |
| --- |
| **PCT/CN2013/087640** |

### A. CLASSIFICATION OF SUBJECT MATTER

G01M 11/02 (2006.01) i

According to International Patent Classification (IPC) or to both national classification and IPC

### B. FIELDS SEARCHED

Minimum documentation searched (classification system followed by classification symbols)

G01M; G02C

Documentation searched other than minimum documentation to the extent that such documents are included in the fields searched

Electronic data base consulted during the international search (name of data base and, where practicable, search terms used)

CNABS, VEN: lens, focal power, prism, beam splitting, hand+, portable, mobile, pocket, glass??, spectacle, reflect???, focal, power, diaphragm, stop, aperture, splitt???, CCD, CMOS

### C. DOCUMENTS CONSIDERED TO BE RELEVANT

| Category* | Citation of document, with indication, where appropriate, of the relevant passages | Relevant to claim No. |
| --- | --- | --- |
| Y | JP 2004279368 A (FUROOBELL KK), 07 October 2004 (07.10.2004), description, paragraphs [0017]-[0025], and figures 2, 5 and 6 | 1-10 |
| Y | CN 101997948 A (HONGFUJIN PRECISION INDUSTRY (SHENZHEN) CO., LTD. et al.), 30 March 2011 (30.03.2011), description, paragraphs [0010]-[0015], and figure 1 | 1-10 |
| A | CN 201731990 U (WUHU OTT OPTICAL INSTRUMENT FACTORY), 02 February 2011 (02.02.2011), the whole document | 1-10 |
| A | CN 101539473 A (CHANGCHUN UNIVERSITY OF SCIENCE AND TECHNOLOGY), 23 September 2009 (23.09.2009), the whole document | 1-10 |
| A | JP 2011141187 A (KONICA MINOLTA OPTO INC.), 21 July 2011 (21.07.2011), the whole document | 1-10 |
| A | DE 3200980 A1 (ASAHI OPTICAL CO., LTD.), 09 September 1982 (09.09.1982), the whole document | 1-10 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 June 2014 (26.06.2014) | **23 July 2014 (23.07.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CHEN, Kai** Telephone No.: (86-10) **62085749** |
| --- | --- |

Form PCT/ISA/210 (second sheet) (July 2009)

## INTERNATIONAL SEARCH REPORT

| | International application No. |
|---|---|
| | **PCT/CN2013/087640** |

**C (Continuation).     DOCUMENTS CONSIDERED TO BE RELEVANT**

| Category* | Citation of document, with indication, where appropriate, of the relevant passages | Relevant to claim No. |
|---|---|---|
| A | EP 1705473 A2 (OCULUS OPTIKGERAETE GMBH), 27 September 2006 (27.09.2006), the whole document | 1-10 |
| A | US 4410267 A (ASAHI OPTICAL CO., LTD.), 18 October 1983 (18.10.1983), the whole document | 1-10 |

Form PCT/ISA/210 (continuation of second sheet) (July 2009)

## INTERNATIONAL SEARCH REPORT
### Information on patent family members

International application No.

**PCT/CN2013/087640**

| Patent Documents referred in the Report | Publication Date | Patent Family | Publication Date |
|---|---|---|---|
| JP 2004279368 A | 07 October 2004 | None | |
| CN 101997948 A | 30 March 2011 | US 2011043494 A1 | 24 February 2011 |
| | | US 8405829 B2 | 26 March 2013 |
| | | CN 101997948 B | 19 February 2014 |
| CN 201731990 U | 02 February 2011 | None | |
| CN 101539473 A | 23 September 2009 | CN 101539473 B | 08 September 2010 |
| JP 2011141187 A | 21 July 2011 | None | |
| DE 3200980 A1 | 09 September 1982 | JPS 57118342 U | 22 July 1982 |
| EP 1705473 A2 | 27 September 2006 | EP 1705473 A3 | 21 November 2007 |
| | | JP 2006267109 A | 05 October 2006 |
| | | US 2006238748 A1 | 26 October 2006 |
| | | JP 4878191 B2 | 15 February 2012 |
| | | DE 202005009847 U1 | 20 October 2005 |
| | | EP 1705473 B1 | 15 December 2010 |
| | | US 7456941 B2 | 25 November 2008 |
| | | DE 502006008488 D1 | 27 January 2011 |
| | | AT 491932 T | 15 January 2011 |
| US 4410267 A | 18 October 1983 | DE 3107338 C2 | 07 May 1987 |
| | | FR 2476860 B1 | 01 July 1983 |
| | | DE 3107338 A1 | 17 December 1981 |
| | | FR 2476860 A1 | 28 August 1981 |

Form PCT/ISA/210 (patent family annex) (July 2009)